# EUROPEAN PATENT SPECIFICATION

(11) **EP 1 817 185 B1**
(45) Date of publication and mention of the grant of the patent: **12.11.2008**
(21) Application number: 05787475.2
(22) Date of filing: 29.09.2005
(51) Int. Cl.: B60G 17/056, B60G 17/04, B60G 11/26, F16F 9/504, F16F 9/06, F16F 9/34

(54) **DEVICE FOR LETTING IN LIQUID INTO A LIQUID RESERVOIR FOR A HYDRAULIC SHOCK ABSORBER AND HYDRAULIC SHOCK ABSORBER PROVIDED WITH SUCH A DEVICE**
VORRICHTUNG ZUM EINLASSEN EINER FLÜSSIGKEIT IN EIN FLÜSSIGKEITSRESERVOIR FÜR EINEN HYDRAULISCHEN STOSSDÄMPFER UND MIT SOLCH EINER VORRICHTUNG AUSGESTATTETER HYDRAULISCHER STOSSDÄMPFER
DISPOSITIF POUR FAIRE ENTRER UN LIQUIDE DANS UN RESERVOIR DE LIQUIDE POUR UN AMORTISSEUR HYDRAULIQUE ET AMORTISSEUR

(30) Priority: 08.10.2004 NL 1027207
(43) Date of publication of application: 15.08.2007
(73) Proprietor: Gebema Beheer B.V., 7255 AX Hengelo (Gld.) (NL)
(72) Inventor: SEESING, Gerard, NL-7255 AX Hengelo (Gld.) (NL)
(74) Representative: Dokter, Hendrik Daniel
(86) International application number: PCT/NL2005/000704
(87) International publication number: WO 2006/038792

(56) References cited:
- FR-A- 2 252 508
- GB-A- 403 284
- US-A- 3 871 680
- US-A- 4 210 344
- US-A- 4 786 034
- US-B1- 6 267 400
- PATENT ABSTRACTS OF JAPAN vol. 011, no. 044 (M-560), 10 February 1987 (1987-02-10) -& JP 61 206836 A (SUZUKI MOTOR CO LTD), 13 September 1986 (1986-09-13)
- PATENT ABSTRACTS OF JAPAN vol. 010, no. 040 (M-454), 18 February 1986 (1986-02-18) -& JP 60 193708 A (MAZDA KK), 2 October 1985 (1985-10-02)
- PATENT ABSTRACTS OF JAPAN vol. 006, no. 193 (M-160), 2 October 1982 (1982-10-02) -& JP 57 101144 A (KAYABA IND CO LTD), 23 June 1982 (1982-06-23)
- PATENT ABSTRACTS OF JAPAN vol. 004, no. 006 (M-088), 18 January 1980 (1980-01-18) -& JP 54 142725 A (KAYABA IND CO LTD), 7 November 1979 (1979-11-07)
- PATENT ABSTRACTS OF JAPAN vol. 1997, no. 02, 28 February 1997 (1997-02-28) -& JP 08 268027 A (KAYABA IND CO LTD), 15 October 1996 (1996-10-15)
- PATENT ABSTRACTS OF JAPAN vol. 012, no. 212 (M-710), 17 June 1988 (1988-06-17) -& JP 63 013805 A (TOYOTA MOTOR CORP), 21 January 1988 (1988-01-21)
- PATENT ABSTRACTS OF JAPAN vol. 014, no. 572 (M-1061), -& JP 02 246815 A (TOKICO LTD), 2 October 1990 (1990-10-02)

## Description

The invention relates to a device for admitting liquid into a liquid reservoir for a hydraulic shock absorber for a vehicle.

A shock absorber is applied in a vehicle in combination with a spring in order to damp the movement of the mass which presses on the spring when for instance the vehicle passes through a bend or brakes sharply.

A hydraulic shock absorber is known wherein a piston provided with valves is received for movement with a piston rod in an oil-filled cylinder. When the associated spring is compressed or extended, the piston rod is pressed in or pulled out, and oil is displaced via suitable valves from the one part of the cylinder separated by the piston to the other, and to or from an oil reservoir. The volume of the quantity of oil displaced to or from the reservoir corresponds to the volume of the part of the piston rod displaced into or out of the cylinder.

The extent to which the piston of a known shock absorber is displaced depends on the external forces on the shock absorber. This has the consequence that when a vehicle takes a sharp bend or takes a bend at high speed, wherein a relatively great force is exerted on the shock absorbers of the outer wheels, it is pressed relatively far downward. The result hereof is that the vehicle tends to roll, which is undesirable. The same problem occurs when a vehicle performing a linear movement brakes sharply. In this case the shock absorbers of the front wheels are pressed in too quickly, as a result of which the vehicle pitches too strongly in forward direction.

In order to prevent the problem of pitch and roll in bends and during braking, measuring and control systems have been developed to measure the forces exerted on a vehicle when it negotiates a bend and during braking, the so-called G-forces, and to derive from these forces correction signals for actuator systems, using which the damping properties of a shock absorber can be modified to the measured G-forces. Such measuring and control systems generally comprise electronic components in combination with one or more electric motors, and thus result in an increase in the costs of purchasing and operating a vehicle.

US A 4 210 344 discloses a shock absorber for a vehicle, which absorber itself is of the fluid piston-cylinder type and is provided in combination with a fluid reservoir containing a hydraulic compressible fluid under high pressure. A check valve is connected between the shock absorber cylinder and the reservoir for passing fluid from the cylinder to the reservoir when the pressure of fluid in the cylinder exceeds the high pressure of fluid in the reservoir. A pressure relief valve in turn connects the reservoir to the cylinder and is set to open a controlled amount to thereby control the pressure of fluid in the cylinder. The pressure relief valve comprises a cylindrical chamber in which a cylindrical valve head is positioned juxtaposed a valve seat and arranged to be moved against this seat to close off a fluid passage completely as by an appropriate spring, which spring is locked against a spring engaging head. The setting of the pressure relief valve can be made automatically responsive to acceleration and deceleration as well as up and down movement of the vehicle, by means of a displaceable mass, which is secured to one end of a lever, which lever at the other end is coupled to a head stem of the spring engaging head in the pressure relief valve.

FR 2 252 508 A discloses a shock absorber for a vehicle, which absorber itself is of the fluid piston-cylinder type and is provided in combination with a fluid reservoir containing a hydraulic compressible fluid. For controlling the pressure of the fluid, a lever is provided, which at one end is secured to a valve, and which at its other end is secured to a mass which is displaceable as a function of the acceleration of the vehicle.

JP 60 193708 A discloses a hydro pneumatic suspension in which a differential pressure valve in parallel with a changeover valve between both liquids of main and gas springs has been arranged, in order to prevent breakdown, oil leakage and cavitation.

US 6 267 400 B1 discloses a bicycle shock absorber which differentiates between upward forces produced by the contact of the bicycle wheel with the terrain and downward movement of the rider's mass.

It is an object of the invention to provide a device for admitting liquid into a liquid reservoir for a hydraulic shock absorber for a vehicle, using which it is possible to control the pressure of the liquid in the damper subject to occurring G-forces.

It is a further object to assemble this device solely from mechanical components, without making use of electronic circuits or electrical actuators.

These objectives are achieved, and other advantages gained, with a device of the type specified in claim 1.

In a shock absorber provided with a liquid reservoir in which two conduit parts debouch which are provided with such valves, as a result of a load on the shock absorber, liquid will, above a determined first pressure and in the absence of the active G-force, flow in through the first conduit part via the opened first valve. The load on the shock absorber can for instance be caused if the vehicle in question drives over an uneven part of a road surface in an otherwise linear direction of movement. If the vehicle drives through a bend a G-force becomes active, perceived by a passenger as centrifugal force. If the first conduit part is closable by the action of this G-force, as a result of a load on the shock absorber, liquid will, above a determined second, higher pressure, flow in through the second conduit part via the opened second valve. The second, higher liquid pressure is developed under said load until it has reached a value sufficient to overcome the pre-pressure under which the second valve is confined, wherein the valve is opened under the pressure of the liquid. Thus is achieved that through the action of a G-force in a predetermined direction the liquid can escape from the shock absorber at a higher pressure than in the absence of this G-force, and the shock absorber imparts a suspension behaviour to the vehicle that is designated as "firm".

An embodiment of a device according to the invention, wherein a plurality of first valves are present in series in the first conduit part, each of which valves can be closed by the action of a differently oriented G-force, achieves that due to the action of each of these differently oriented G-forces the liquid can escape from the shock absorber at a higher pressure than in the absence of each of these G-forces. In this manner it is possible to provide a shock absorber with which the resulting suspension behaviour of the vehicle is optionally "firm" when the vehicle travels through a bend (in which case the relevant first valve is closable through the action of a G-force directed transversely of the vehicle), brakes sharply (in which case the relevant first valve is closable through the action of a G-force directed in longitudinal direction and counter to the direction of movement of the vehicle), or drives over a speed bump (in which case the relevant first valve is closable by the action of a G-force directed vertically downward).

In a device according to the invention the liquid reservoir comprises for instance a cylindrical container with a first chamber for containing a quantity of gas confined under a determined pressure and a second chamber separated therefrom by a movable separating piston for the purpose of receiving liquid.

The invention further relates to a hydraulic shock absorber provided with a device as described above for admitting liquid into the liquid reservoir of this shock absorber.

In a preferred embodiment of a hydraulic shock absorber admitting liquid into the liquid reservoir of this shock absorber.

In a preferred embodiment of a hydraulic shock absorber according to the invention, the device for admitting liquid is accommodated in a housing integrated with the shock absorber.

The invention will be elucidated hereinbelow on the basis of exemplary embodiments and with reference to the drawings.

In the drawings
Fig. 1 shows a highly simplified view of a diagram of a shock absorber provided with a liquid reservoir with a first embodiment of a liquid inlet control according to the invention in a first situation,
Fig. 2 is a highly simplified view of a part of the control shown in fig. 1 in a second situation,
Fig. 3 shows a diagram of a vehicle with four wheels and the G-forces possibly acting on this vehicle, and
Fig. 4a-4d show a highly simplified view of a diagram of a shock absorber provided with a liquid reservoir with a second embodiment of a liquid inlet control according to the invention, successively in a first, second, third and fourth situation.

Corresponding components are designated in the figures with the same reference numerals.

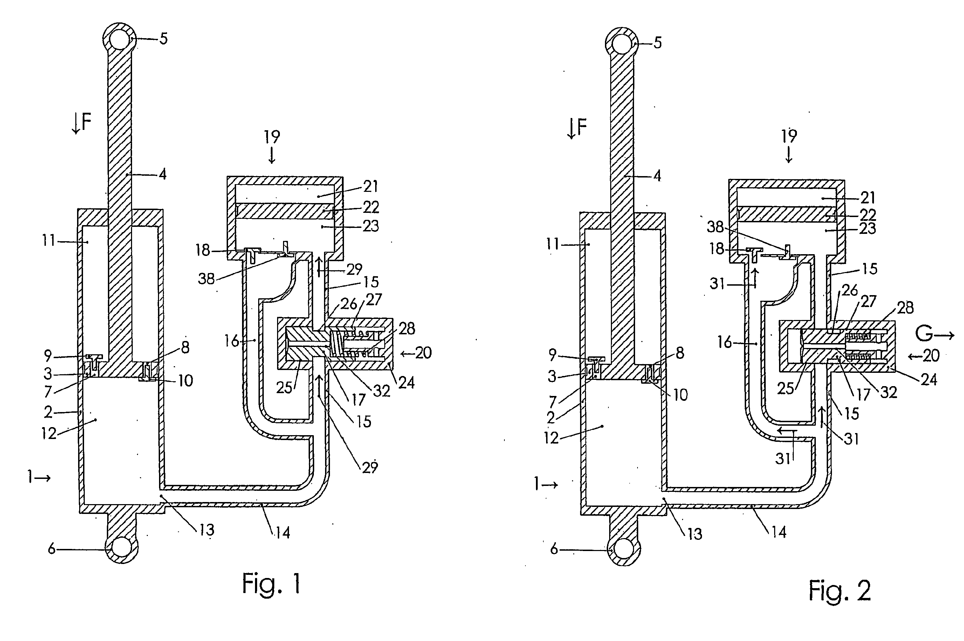

Fig. 1 and fig. 2 show a hydraulic shock absorber 1 with an operating cylinder 2 which is filled with a liquid (in particular oil) and in which a piston 3 with piston rod 4 is movable, provided with fixing eyes 5, 6 for mounting of shock absorber 1 in a vehicle. Present in piston 3 are passage openings 7, 8 which are closed by respective valves 9, 10 which are confined against a pressure spring (not shown). Piston 3 divides cylinder 2 into an upper 11 and a lower operating space 12, this latter being in open connection via a passage opening 13 with a conduit 14 which branches into a first conduit part 15 and a second conduit part 16. The first 15 and the second conduit part 16 debouch respectively via a first valve 17 and a second valve 18 into the liquid space 23 of a liquid reservoir 19, which further also comprises a gas space 21, which is separated from liquid space 23 by a separating piston 22. In this embodiment the liquid space 23 also forms the conduit part connecting the outlet side of first valve 17 and second valve 18. For discharge of liquid in the case of overpressure in liquid space 23 relative to second conduit part 16, a non-return valve 38 is present which in practical cases is integrated into second valve 18. The first valve is a three-part cylindrical body 17 which is accommodated in a cylindrical housing for displacement counter to pressure spring 28 and a first part 25 of which has a diameter corresponding to the diameter of housing 24, a second central part 26 of which has a smaller diameter and a third part 27 of which again has a diameter corresponding to the diameter of housing 24. Cylindrical body 17 is displaceable in housing 24 between a rest position (shown in fig. 1), wherein the central part 26 is situated just in second conduit part 15 as a result of which conduit 14 is in open connection with liquid space 23, and an operating position (shown in fig. 2), wherein the part 25 of larger diameter is situated just in the second conduit part 15 which is thereby closed, as a result of which conduit 14 is in connection with liquid space 23 only via second conduit part 16 and second valve 18. Cylindrical body 17 is provided with an axial bore 32 to allow displacement of liquid in cylindrical housing 24 when body 17 is displaced.

Closing valve 17 and second valve 18 together form a control 20, the operation of which can be seen as follows.

If piston rod 4 of shock absorber 1 in a vehicle is pressed in by the action of a force F, represented by arrow F in fig. 1, a part of the oil flows out of the lower operating space 12 via valve 9 to the first operating space 11, and another part flows via passage opening 13 into conduit 14. In the absence of G-forces having a component in the axial direction of cylindrical housing 24, closing valve 17 in the first conduit part 15 is opened, valve 18 in the second conduit part 16 is closed and the oil, represented by arrow 29, flows out of the lower operating space 12 via the first conduit part 15 into liquid space 23 of liquid reservoir 19.

If a G-force is present which does have a component in the axial direction of cylindrical housing 24, for instance if the relevant vehicle is travelling in a bend, closing valve 17 in the first conduit part 15 is closed by this G-force counter to the spring force produced by pressure spring 28, as a result of which the pressure on the oil increases due to the action of the force F on piston 3, as a result of which valve 18 in second conduit part 16 is opened counter to the force produced by the spring on this valve 18, and the oil, as represented by arrow 31, flows out of the lower operating space 12 via second conduit part 15 into liquid space 23 of liquid reservoir 19.

The damping characteristics of shock absorber 1 depending on occurring G-forces can thus be chosen subject to, among other factors, the orientation of cylindrical housing 24, the mass and the dimensions of closing valve 17 and valve 18, and the values of the spring constants of pressure spring 28 on closing valve 17 and the pressure spring (not shown) on valve 18.

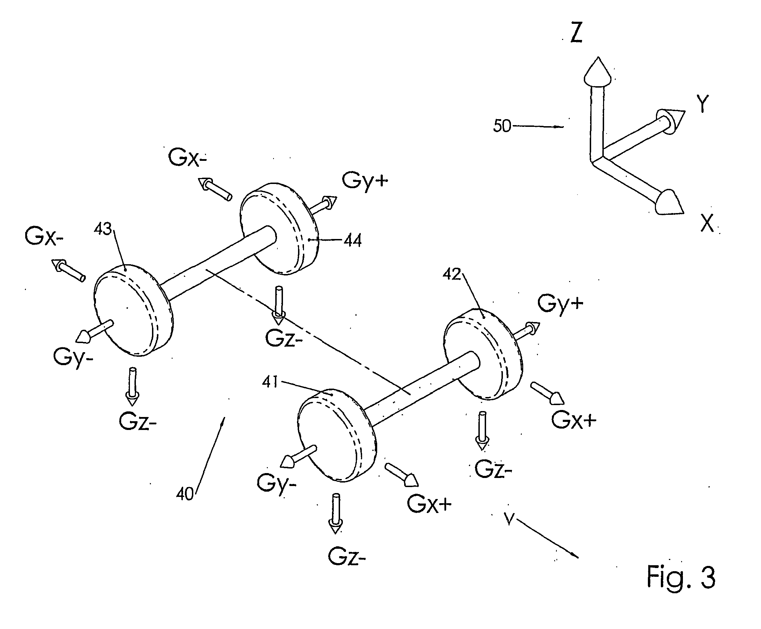

Fig. 3 shows schematically a vehicle 40 with wheels 41-44 shown in the XY plane of a cartesian coordinate system 50, wherein the direction of forward movement, represented by arrow V, is in X direction. Indicated are the apparent forces (G-forces) which can be exerted with a change of speed at the position of the four wheels 41-44. With sharp braking there occurs for instance an apparent force G_{X+} in forward direction, when a bend to the right is negotiated there occurs an apparent force G_{Y-} in a direction to the left transversely of the vehicle, when a bend to the left is negotiated there occurs an apparent force G_{Y+} in a direction to the right transversely of the vehicle, with strong acceleration there occurs an apparent force G_{X-} in rearward direction, and during travel over a raised part in the road surface there occurs an apparent force G_{Z-} in downward direction. The figure indicates which of these forces is most strongly manifest at which wheel 41-44 in the form of pitch and roll of the vehicle when a change of speed occurs. During sharp braking the forward apparent force G_{X+} is for instance most strongly manifest at front wheels 41, 42 of the vehicle in the form of pitching in forward direction, and when a bend to the right is negotiated the apparent force G_{Y+} to the left manifests itself most strongly at the left-hand wheels 42, 44 in the form of rolling of the vehicle. By making a suitable combination of valves which can each be closed in a control according to the invention under a determined G-force, a shock absorber can be assembled for each of the four wheels which provides a firm suspension behaviour specifically for each of these wheels.

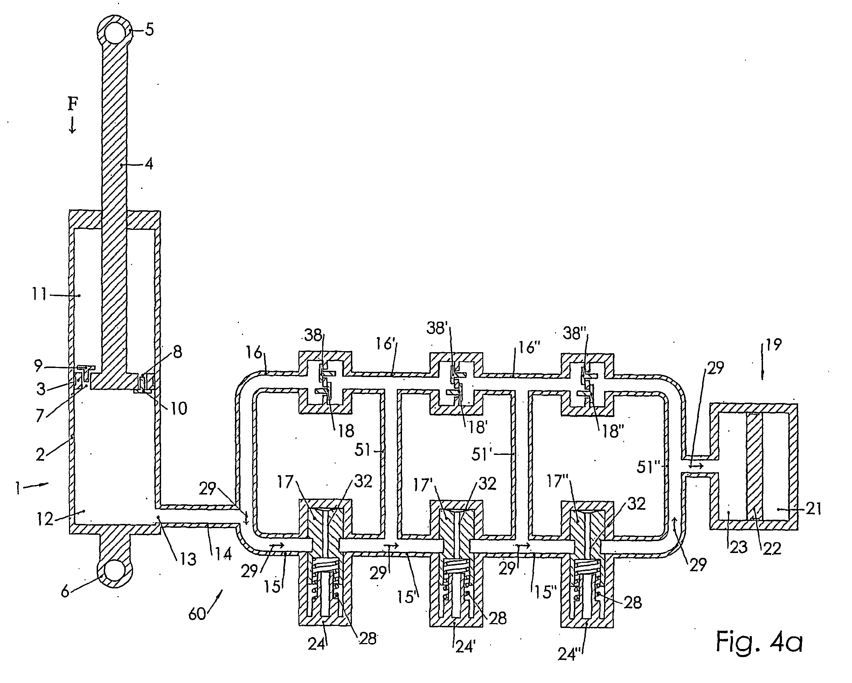

Fig. 4a shows a diagram for a control device 60 for a shock absorber for the right front wheel 41 of vehicle 40 of fig. 3, with closing valves 17, 17' and 17" for controlling the liquid flow subject to the occurrence of G-forces G_{X+}, G_{Y-} and G_{Z-} in respectively forward direction, a direction laterally to the right and vertically downward direction. Closing valves 17, 17' and 17" are placed in a first branch 15, 15', 15" of liquid conduit 14, wherein valves 18, 18', 18" are placed in a parallel second branch 16, 16', 16". Closing valves 17, 17' and 17" and valves 18, 18', 18" are connected in each case on their respective inlet sides and outlet sides by a conduit part 15/16, 51, 51', 51". The axial directions of housings 24, 24' 24" of the respective second valves 17, 17' and 17" in control device 60 are parallel to the direction of the relevant respective G-forces G_{X+}, G_{Y-} and G_{Z-}. The figure shows the control 60 in a first situation, wherein vehicle 40 moves forward at uniform speed, i.e. in the absence of G-forces. If in this situation the piston rod 4 of shock absorber 1 in a vehicle is pressed in by the action of a force F, represented by arrow F, a part of the oil flows out of the lower operating space 12 via passage opening 13 into conduit 14 and flows, as indicated by arrows 29, via the first conduit part 15, 15', 15" into liquid space 23 of liquid reservoir 19.

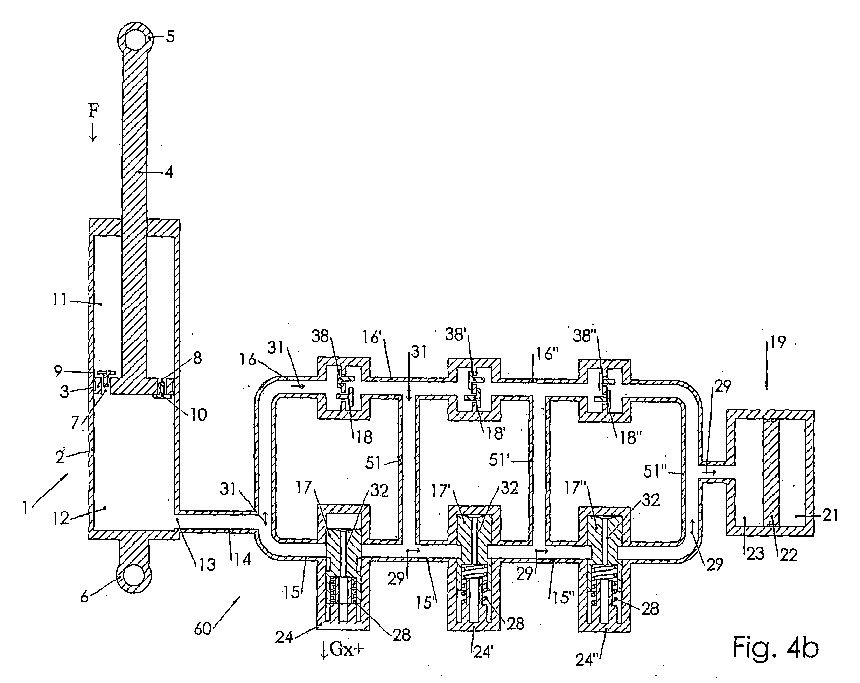

Fig. 4b shows the diagram for the control device 60 as shown in fig. 4a in a second situation, wherein vehicle 40 brakes sharply, wherein an apparent force G_{X+} occurs, due to the action of which the closing valve 17 in housing 24 is displaced and the first conduit part 15 is closed. If in this situation the piston rod 4 of shock absorber 1 in a vehicle is pressed in by the action of a force F, represented by arrow F, a part of the oil flows out of the lower operating space 12 via passage opening 13 into conduit 14 and, as indicated by arrows 29 and 31, flows via the second conduit part 16, the second valve 18 confined under spring pressure, the second conduit part 16', the connecting conduit 51, the first conduit parts 15', 15" and connecting conduit 51" into liquid space 23 of liquid reservoir 19.

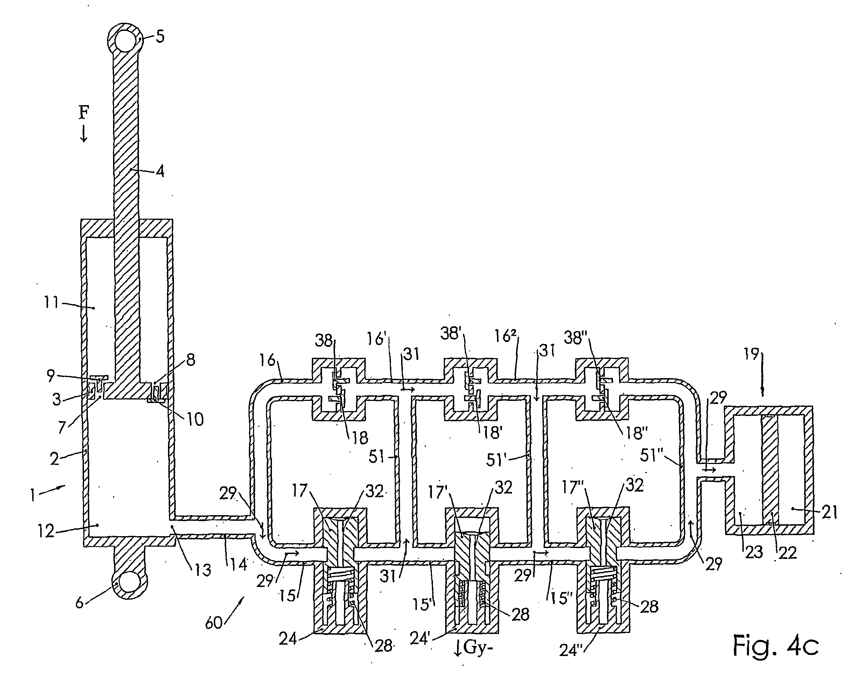

Fig. 4c shows the diagram for the control device 60 as shown in fig. 4a in a third situation, wherein vehicle 40 takes a bend to the left, wherein an apparent force G_{Y-} occurs, due to the action of which the closing valve 17' in housing 24' is displaced and the first conduit part 15' is closed. If in this situation the piston rod 4 of shock absorber 1 in a vehicle is pressed in by the action of a force F, represented by arrow F, a part of the oil flows out of the lower operating space 12 via passage opening 13 into conduit 14 and, as indicated by arrows 29 and 31, flows via the first conduit parts 15, 15', connecting conduit 51, the second valve 18' confined under spring pressure, connecting conduit 51', the first conduit part 15" and connecting conduit 51" into liquid space 23 of liquid reservoir 19.

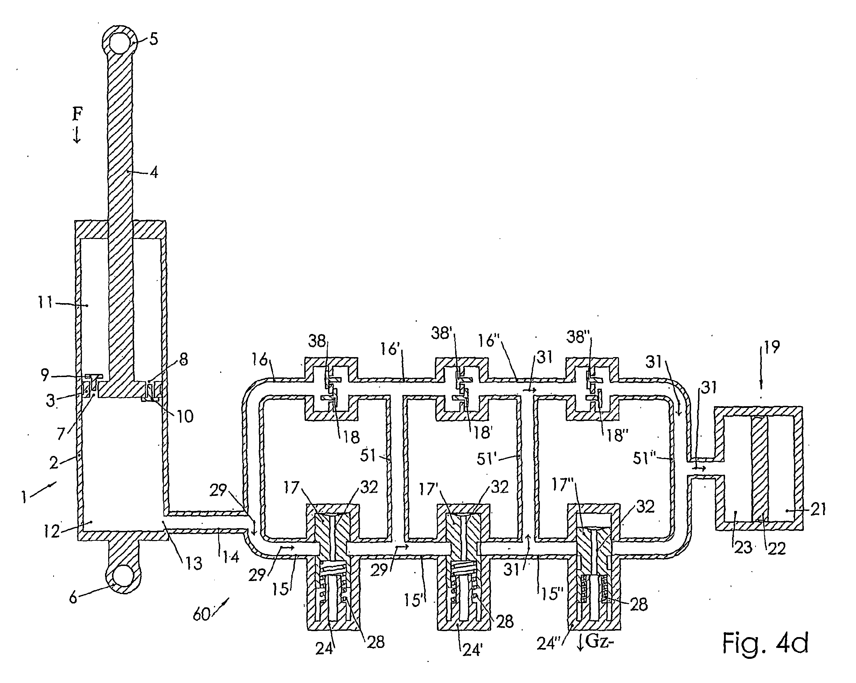

Fig. 4d shows the diagram for the control device 60 as shown in fig. 4a in a fourth situation, wherein vehicle 40 drives over an irregularity in the road surface, for instance a speed bump, wherein an apparent force G_{Z-} occurs, due to the action of which the closing valve 17" in housing 24" is displaced and the first conduit part 15" is closed. If in this situation the piston rod 4 of shock absorber 1 in a vehicle is pressed in by the action of a force F, represented by arrow F, a part of the oil flows out of the lower operating space 12 via passage opening 13 into conduit 14 and, as indicated by arrows 29 and 31, flows via the first conduit parts 15, 15', 15", connecting conduit 51', second conduit part 16", the third valve 18" confined under spring pressure, and connecting conduit 51" into liquid space 23 of liquid reservoir 19.

In a vehicle in which the wheel suspension of the right front wheel is provided with a shock absorber with a liquid control as according to the diagram of figures 4a-4d, forward pitching of the vehicle during sharp braking, rolling of the right-hand side when a bend is taken to the left and the forward pitching when driving over a speed bump are considerably damped. It will be apparent to the skilled person that a control for a shock absorber for the left front wheel and both rear wheels can be assembled in similar manner.

## Claims

1. Device (20, 60) for admitting liquid into a liquid reservoir (19) for a hydraulic shock absorber (1) for a vehicle, which device is provided with control means (17, 17', 17"; 18, 18', 18") for admitting liquid into the liquid reservoir (19) subject to G-forces exerted on the vehicle, which control means (17, 17', 17"; 18, 18', 18") comprise at least one first valve (17, 17', 17") and at least one second valve (18, 18', 18") which are provided in respectively a first conduit part (15, 15', 15") and a second conduit part (16, 16', 16") parallel thereto of a liquid conduit (14) debouching in the liquid reservoir (19), wherein the first valve (17, 17', 17") is accommodated in opened state and can be closed through the action of a G-force acting in a determined direction, and the second valve (18, 18', 18") is accommodated in closed state counter to a pre-pressure, and wherein the first valve (17, 17', 17") and the second valve (18, 18', 18") are connected in each case on their respective inlet sides and outlet sides by a conduit part (51, 51', 51"), which first valve (17, 17', 17") is displaceable under a pre-pressure in the direction of the active G-force and transversely of the first conduit part (15) between a first position and a second position, **characterized in that** the first valve (17, 17', 17") is formed by an at least two-part cylindrical body which is accommodated against a pressure spring (28) in a cylindrical housing (24, 24', 24"), a first part (25) of which cylindrical body has a first diameter corresponding to the diameter of the housing (24, 24', 24"), and a second part (26) of which has a second diameter smaller than the first diameter, such that the first conduit part (15, 15', 15") is open in the absence of the G-force and the first valve (17, 17', 17") in the first conduit part (15, 15', 15") is closed counter to the spring force produced by the pressure spring (28) by a G-force which does have a component in the axial direction of the housing (24, 24', 24").

2. Device (20, 60) as claimed in claim 1, **characterized in that** the cylindrical body is provided with an axial bore (32) to allow displacement of liquid in cylindrical housing (24) when the body is displaced.

3. Device (60) as claimed in any of the claims 1-2, **characterized in that** a plurality of first valves (17, 17', 17") are present in series in the first conduit part (15, 15', 15"), each of which valves (17, 17', 17") can be closed by the action of a differently oriented G-force.

4. Device (20, 60) as claimed in any of the claims 1-3, **characterized in that** the second valve (18) is confined under a pre-pressure produced by a pressure spring.

5. Device (20, 60) as claimed in any of the foregoing claims, wherein the liquid reservoir (19) comprises a cylindrical container with a first chamber (21) for containing a quantity of gas confined under a determined pressure and a second chamber (23) separated therefrom by a movable separating piston (22) for the purpose of receiving liquid.

6. Hydraulic shock absorber (1) provided with a device (20, 60) as claimed in any of the claims 1-5.

7. Hydraulic shock absorber as claimed in claim 6, **characterized in that** the device (20, 60) is accommodated in a housing integrated with the shock absorber (1).

## Patentansprüche

1. Vorrichtung (20, 60) zum Einlassen von Flüssigkeit in einen Flüssigkeitsbehälter (19) für einen hydraulischen Stoßdämpfer (1) für ein Fahrzeug, welche Vorrichtung mit Regelmitteln (17, 17', 17"; 18, 18', 18") zum Einlassen von Flüssigkeit in den Flüssigkeitsbehälter (19) ausgestattet ist in Abhängigkeit von auf das Fahrzeug einwirkenden G-Kräften, welche Regelmittel (17, 17', 17"; 18, 18', 18") wenigstens ein erstes Ventil (17, 17', 17") und wenigstens ein zweites Ventil (18, 18', 18") enthalten, die in jeweils einem ersten Leitungsteil (15, 15', 15") und einem zweiten dazu parallel angeordneten Leitungsteil (16, 16', 16") einer in den Flüssigkeitsbehälter (19) mündenden Flüssigkeitsleitung (14) bereitgestellt sind, wobei das erste Ventil (17, 17', 17") in geöffnetem Zustand aufgenommen ist und unter Einwirkung einer in eine bestimmte Richtung wirksame G-Kraft abschließbar ist und das zweite Ventil (18, 18', 18") in geschlossenem Zustand gegen einen Vordruck aufgenommen ist, und wobei jeweils ein erstes Ventil (17, 17', 17") und ein zweites Ventil (18, 18', 18") an ihren jeweiligen Einlassseiten und Auslassseiten durch ein Leitungsteil (51, 51', 51") verbunden sind, welches erste Ventil (17, 17', 17") unter Vordruck in die Richtung der wirksamen G-Kraft und quer zum ersten Leitungsteil (15) zwischen einem ersten Stand und einem zweiten Stand verschiebbar ist, **dadurch gekennzeichnet, dass** das erste Ventil (17, 17', 17") durch einen in einem zylindrischen Gehäuse (24, 24', 24") gegen eine Druckfeder (28) aufgenommenen wenigstens zweiteiligen zylinderförmigen Körper (17, 17', 17") gebildet wird, wovon ein erster Teil (25) einen ersten Durchmesser aufweist, der mit dem Durchmesser des Gehäuses (24, 24', 24") übereinstimmt, und wovon ein zweiter Teil (26) einen zweiten Durchmesser kleiner als den ersten Durchmesser aufweist, in einer solchen Weise, dass das erste Leitungsteil (15, 15', 15") in Abwesenheit der G-Kraft geöffnet ist und das erste Ventil (17, 17', 17") in dem ersten Leitungsteil (15, 15', 15") gegen die durch die Druckfeder (28) gelieferte Federkraft durch eine G-Kraft geschlossen ist, die eine Komponente in der axialen Richtung des Gehäuses (24, 24', 24") aufweist.

2. Vorrichtung (20, 60) nach Anspruch 1, **dadurch gekennzeichnet, dass** der zylindrische Körper mit einer axialen Bohrung (32) für das Verdrängen lassen von Flüssigkeit in das zylindrische Gehäuse (24) bei Verschiebung des Körpers ausgestattet ist.

3. Vorrichtung (20, 60) nach einem der Ansprüche 1-2, **dadurch gekennzeichnet, dass** in dem ersten Leitungsteil (15, 15', 15") mehrere erste Ventile (17, 17', 17") in Serie vorliegen, wobei jedes der Ventile (17, 17', 17") unter Einwirkung einer unterschiedlich gerichteten G-Kraft abschließbar ist.

4. Vorrichtung (20, 60) nach einem der Ansprüche 1-3, **dadurch gekennzeichnet, dass** das zweite Ventil (18) unter einem durch eine Druckfeder gelieferten Vordruck eingeschlossen ist.

5. Vorrichtung (20, 60) nach einem der vorigen Ansprüche, wobei der Flüssigkeitsbehälter (19) eine zylindrische Halterung mit einer ersten Kammer (21) zum Halten einer Menge unter einem bestimmten Druck eingeschlossenen Gases und einer durch einen beweglichen Trennkolben (22) davon getrennten zweiten Kammer (23) zur Aufnahme von Flüssigkeit enthält.

6. Hydraulischer Stoßdämpfer (1), ausgestattet mit einer Vorrichtung (20, 60) nach einem der Ansprüche 1-5.

7. Hydraulischer Stoßdämpfer nach Anspruch 6, **dadurch gekennzeichnet, dass** die Vorrichtung (20, 60) in einem mit dem Stoßdämpfer (1) integrierten Gehäuse aufgenommen ist.

## Revendications

1. Dispositif (20, 60) pour faire entrer un liquide dans un réservoir de liquide (19) pour un amortisseur hydraulique (1) pour véhicule, ledit dispositif comprenant des moyens de commande (17, 17', 17"; 18, 18', 18") pour faire entrer un liquide dans le réservoir de liquide (19) un liquide qui est soumis à des forces d'accélération exercées sur le véhicule, lesdits moyens de commande (17, 17', 17"; 18, 18', 18") comprenant au moins une première soupape (17, 17', 17") et au moins une deuxième soupape (18, 18', 18") qui sont disposées respectivement dans une première partie de conduit (15, 15', 15") et une deuxième partie de conduit (16, 16', 16"), parallèle à la première partie de conduit, d'un conduit de liquide (14) qui débouche dans le réservoir de liquide (19), dans lequel la première soupape (17, 17', 17") est installée dans un état ouvert et peut être fermée par l'action d'une force d'accélération qui agit dans une direction déterminée, et la deuxième soupape (18, 18', 18") est installée dans un état fermé contre une pré-pression, et dans lequel la première soupape (17, 17', 17") et la deuxième soupape (18, 18', 18") sont connectées dans chaque cas à leurs côtés d'entrée et leurs côtés de sortie respectifs par une partie de conduit (51, 51', 51"), ladite première soupape (17, 17', 17") pouvant être déplacée sous l'action d'une pré-pression dans la direction de la force d'accélération active et transversalement à la première partie de conduit (15) entre une première position et une deuxième position, **caractérisé en ce que** la première soupape (17, 17', 17") est formée par un corps cylindrique au moins en deux parties qui est installée contre un ressort de pression (28) dans un boîtier cylindrique (24, 24', 24"), une première partie (25) dudit corps cylindrique présentant un premier diamètre qui correspond au diamètre du boîtier (24, 24', 24"), et une deuxième partie (26) dudit corps cylindrique présentant un deuxième diamètre qui est inférieur au premier diamètre, de telle sorte que la première partie de conduit (15, 15', 15") soit ouverte en l'absence de la force d'accélération, et que la première soupape (17, 17', 17") dans la première partie de conduit (15, 15', 15") soit fermée contre la force élastique produite par le ressort de pression (28) par une force d'accélération qui présente une composante dans la direction axiale du boîtier (24, 24', 24").

2. Dispositif (20, 60) selon la revendication 1, **caractérisé en ce que** le corps cylindrique comporte un alésage axial (32) qui sert à permettre le déplacement du liquide dans le boîtier cylindrique (24) lorsque le corps est déplacé.

3. Dispositif (60) selon l'une quelconque des revendications 1 et 2, **caractérisé en ce qu'**une pluralité de premières soupapes (17, 17', 17") sont disposées en série dans la première partie de conduit (15, 15', 15"), chacune de ces soupapes (17, 17', 17") pouvant être fermée par l'action d'une force d'accélération à orientation variable.

4. Dispositif (20, 60) selon l'une quelconque des revendications 1 à 3, **caractérisé en ce que** la deuxième soupape (18) est confinée sous une pré-pression produite par un ressort de pression.

5. Dispositif (20, 60) selon l'une quelconque des revendications précédentes, dans lequel le réservoir de liquide (19) comprend un conteneur cylindrique comprenant une première chambre (21) destinée à contenir une quantité de gaz confiné sous une pression déterminée, et une deuxième chambre (23) séparée de la première chambre par un piston de séparation mobile (22) et destinée à recevoir un liquide.

6. Amortisseur hydraulique (1) équipé d'un dispositif (20, 60) selon l'une quelconque des revendications 1 à 5.

7. Amortisseur hydraulique selon la revendication 6, **caractérisé en ce que** le dispositif (20, 60) est logé dans un boîtier qui est intégré à l'amortisseur (1).
